# FASCICULE DE BREVET EUROPEEN

(11) **EP 0 284 592 B1**
(45) Date de publication et mention de la délivrance du brevet: **11.08.1993**
(21) Numéro de dépôt: 88870046.5
(22) Date de dépôt: 14.03.1988
(51) Int. Cl.: H05B 39/10, H02H 9/04

(54) **Dispositif permettant le rétablissement du courant de ligne en cas de claquage d'un ou de plusieurs éléments d'un montage en série**
Einrichtung zum Ermöglichen der Wiederherstellung des Stroms einer Leitung im Falle des Durchschlagens eines oder mehrerer Elemente einer Serienschaltung
Device allowing the restoration of the line courant in case of the burning out of one or several elements of a series arrangement

(30) Priorité: 19.03.1987 LU 86815
(43) Date de publication de la demande: 28.09.1988
(73) Titulaire: S.A. BY-PASS CONTROL, B-4031 Angleur (BE)
(72) Inventeur: Mawet, Jacques, B-4940 Trooz (BE)
(74) Mandataire: Van Malderen, Michel

(56) Documents cités:
- DE-A- 1 960 589
- DE-A- 2 308 464
- DE-A- 3 209 186
- GB-A- 1 095 673
- US-A- 3 912 966

## Description

### Objet de l'invention

La présente invention est relative à un dispositif qui permet le rétablissement automatique et rapide du courant de ligne en cas de claquage d'un ou de plusieurs éléments faisant partie d'un montage en série, tel que par exemple un montage en série de lampes à basse tension alternative.

### Arrière-plan technologique et état de la technique

On connaît, par le brevet GB-A-1.095.673, un montage en séries d'ampoules à incandescence, permettant d'indiquer la défaillance d'une ampoule donnée en cas de claquage, sans interrompre le circuit. Un montage à semi-conducteur est monté en parallèle sur chaque ampoule et permet au circuit de continuer à fonctionner même quand une ampoule a claqué. On constate alors aux bornes des ampoules restant valides l'apparition d'une surtension.

Un tel dispositif est destiné à être utilisé avec des ampoules à filaments classiques, c'est-à-dire dans un circuit où circulent de très petits courants (de l'ordre de quelques dizaines de milliampères).

Il ne pourrait être utilisé dans le cas d'un montage en série composé de lampes halogènes basse tension. En effet, dans ce cas, les surtensions atteindraient des valeurs inadmissibles par rapport à la tension nominale.

Le document DE-A-1.960.589 décrit un dispositif comportant des semi-conducteurs et permettant, dans un montage en série de plusieurs lampes comportant chacune un filament principal et un filament de réserve en parallèle, de mettre en circuit le filament de réserve au cas où le filament principal claque et donc de rétablir le courant de ligne. Le dédoublement des filaments est relativement onéreux.

### Buts de l'invention

Un but de la présente invention consiste à fournir un dispositif qui permet le rétablissement du courant de ligne dans le cas d'un claquage d'un élément d'un montage en série, ce dispositif convenant aussi bien pour des ampoules classiques que pour des lampes halogènes basse tension, et ne provoquant pas de surtension aux bornes des éléments non claqués.

Un autre but consiste à fournir un dispositif du type susmentionné grâce auquel le rétablissement du courant de ligne s'effectue automatiquement et quasi instantanément c'est-à-dire après un temps de réponse précis, déterminé soit par le nombre d'éléments mis en série, soit par le moment où le claquage intervient dans l'alternance.

Un autre but de l'invention est de fournir un dispositif dont le comportement est indépendant du nombre de lampes claquées dans la fourchette de 0 à 4 lampes claquées pour 10 lampes montées en série dans le montage.

### Eléments essentiels de l'invention

Les buts de la présente invention sont atteints par un montage à semi-conducteur monté en dérivation sur chaque élément du montage en série et comportant une gâchette, une première borne étant reliée en amont dudit élément, ledit montage à semi-conducteur étant enclenché et maintenu en état de conduction dès que la tension à ses bornes devient supérieure à un seuil de tension préalablement fixé entre sa gâchette et ladite deuxième borne, dans lequel le seuil de tension entre la gâchette et la deuxième borne est fixé au moyen d'un circuit constitué d'un semi-conducteur de type DIAC (21) et d'autre part d'un circuit RC, et de deux diodes Zener montées en tête-bêche. Celles-ci sont raccordées d'une part à la première borne et d'autre part à la deuxième borne par l'intermédiaire d'une résistance de limitation de courant. Le circuit RC est raccordé à la première borne et au noeud entre la résistance de limitation de courant et les diodes Zener. Le DIAC 21 est raccordé entre la gâchette et le noeud entre la résistance et le condensateur du circuit RC.

Le cas échéant, le semi-conducteur de type DIAC peut être remplacé par deux diodes Zener en opposition.

Selon une forme d'exécution avantageuse de la présente invention, le montage à semi-conducteur consiste en un triac.

Le dispositif de l'invention peut également comporter une résistance de maintien de tension entre la gâchette et la première borne du montage à semi-conducteur. Le condensateur entre ces deux bornes est destiné à assurer un retard adéquat à la conduction du triac pour garantir une tension efficace vraie aux bornes des autres éléments, inférieure ou égale à leur tension nominale.

On constate que le dispositif selon la présente invention est particulièrement simple et fait appel à un nombre très réduit de composants. Il en résulte qu'il est particulièrement peu onéreux.

Un autre avantage du dispositif conforme à la présente invention réside dans le fait qu'il permet de simplifier substantiellement les installations et montages d'éléments en série. En effet, les montages classiques d'éléments à basse tension exigent bon nombre de transformateurs qui sont relativement onéreux; de plus, les sections de câbles sont relativement importantes et le réglage de la tension est difficile et onéreux.

L'utilisation du dispositif conforme à la présente invention permet de supprimer tous ces transformateurs ou éventuellement utiliser un seul transformateur ou autotransformateur et permet de réduire la section des câbles. Le réglage de la tension est classique et donc très simple. Il en résulte un prix de revient et d'installation notablement réduit.

Il y a encore lieu de noter que le dispositif de la présente invention peut être associé à un moyen de limitation de courant (fonction générale qui agit en "slow start") à l'enclenchement du circuit série.

### Brève description des figures

La figure 1 est un montage à semi-conducteur proche d'un montage classique illustrant une variation possible d'après l'état de la technique;
la figure 2 est un montage à semi-conducteurs proche d'un montage classique illustrant une autre variation possible d'après l'état de la technique;
la figure 3 illustre une forme d'exécution préférée du dispositif conforme à la présente invention.

### Description détaillée des figures

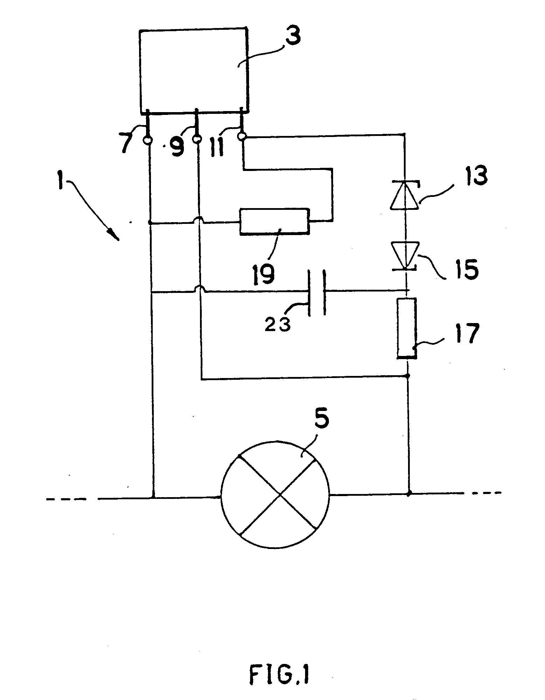

En référence à la figure 1, le dispositif 1 comporte un montage à semi-conducteur 3 monté en dérivation sur chaque élément, par exemple une lampe 5, du montage en série. Une première borne 7 dudit élément à semi-conducteur 3 qui est de préférence un triac est avantageusement reliée en amont de la lampe 5 et une deuxième borne 9 est reliée en aval de celle-ci. Le triac 3 comporte également une gâchette 11 qui est reliée à la branche de la deuxième borne par l'intermédiaire de deux diodes Zener 13, 15 montées en tête-bêche ou d'un diac équivalent.

Le circuit comporte encore une résistance de limitation de courant 17 et une résistance 19 qui permet de maintenir la tension entre la gâchette et la première borne du triac.

Le circuit décrit ci-dessus permet de mesurer en permanence la tension et/ou le courant de l'élément en série, en l'occurence une lampe. L'utilisation de deux diodes Zener en tête-bêche ou d'un diac permet de contrôler la tension dans chaque alternance.

En cas de claquage de la lampe 5, la tension à ses bornes monte pour atteindre la tension d'alimentation du montage en série. Toutefois, dès que la tension devient supérieure au seuil de tension fixé par les diodes Zener 13, 15, le triac 3 est enclenché et maintenu en état de conduction. Il en résulte que le courant est dérivé via le triac pour alimenter les éléments suivants du montage série.

On constate aisément que la commutation se fait très rapidement, à moins d'une milliseconde.

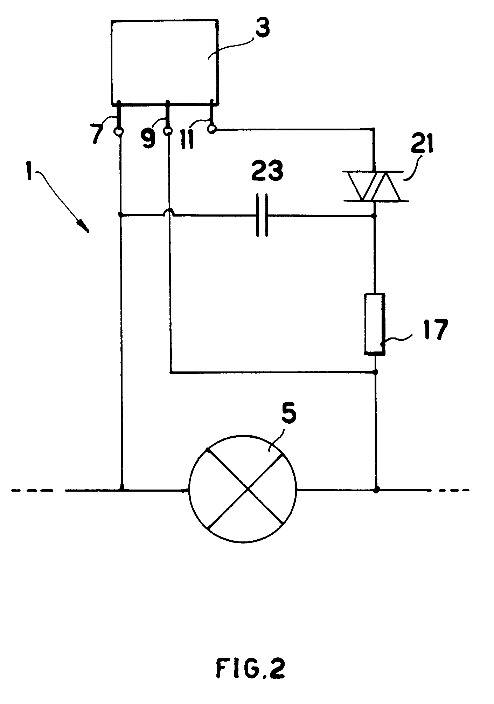

A la figure 2, on a représenté une autre forme de montage illustrant une variation possible d'après l'état de la technique dans laquelle on a remplacé les deux diodes montées en opposition par un semi-conducteur du type DIAC 21. Par ailleurs, un condensateur 23 est monté en reliant la première borne 7 à la gâchette 11, en aval du semi-conducteur de type DIAC 21.

Grâce au circuit RC ainsi réalisé, on introduit un retard dans l'enclenchement du circuit dérivateur. Ceci permet de maintenir la valeur efficace vraie du courant inférieure ou égale au courant nominal.

La constante de temps est établie en fonction du nombre d'éléments montés en série et de la tension efficace vraie maximum autorisée à tout moment aux bornes de n'importe quel élément, c'est-à-dire du nombre de lampes claquées que le montage peut supporter.

Le condensateur se charge, atteint la tension de déclenchement du semi-conducteur 21 du type DIAC qui s'amorce et délivre une impulsion au semi-conducteur 3 du type TRIAC par décharge capacitive. Si le TRIAC reste bloqué, le phénomène se répète. Si le TRIAC s'enclenche, il reste passant et ce jusqu'à la fin de l'alternance.

A titre d'exemple, on peut citer comme valeurs des composants utilisés, dans le cas de lampes de 24 V, un condensateur 23 de 100 nF et une résistance 17 de 22 K ohms. On obtient ainsi un retard de 2,2 ms.

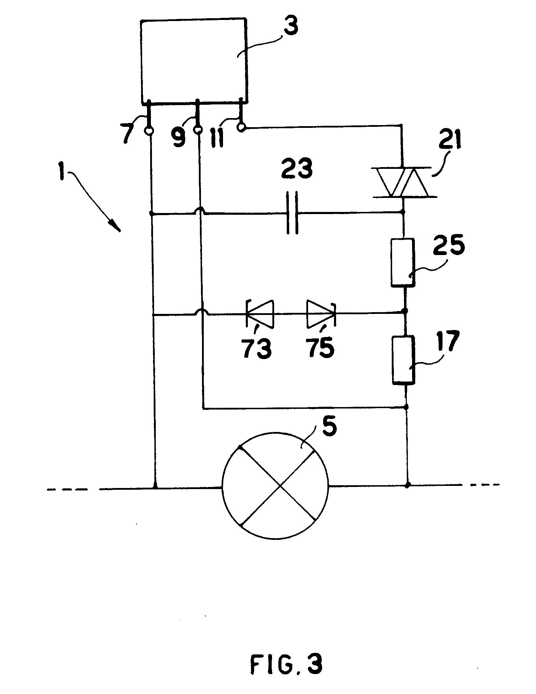

Selon la forme d'exécution conforme à la présente invention représentée à la figure 3, le comportement du montage est indépendant du nombre de lampes claquées dans la fourchette 0 à 4 lampes claquées pour 10 lampes montées en série.

Une alimentation constante est maintenue pendant l'intervalle de temps considéré, soit 2,5 à 7,5 ms grâce à un circuit comportant une résistance de limitation de courant 17 et deux diodes Zener montées en opposition 73,75. Le circuit RC 25,23 dont la résistance 25 est supérieure à la résistance de limitation de courant 17 est alimenté à une valeur constante de sorte qu'il se trouve toujours alimenté à la même tension entre 4,5 et 7,5 ms.

Ce dispositif permet, par un choix judicieux des valeurs des composants de maintenir une tension efficace vraie inférieure ou égale à la tension nominale des lampes en série.

Un avantage réside dans l'utilisation de composants électroniques peu onéreux. En outre, leur nombre est particulièrement réduit.

Un autre avantage consiste en ce que la commutation est entièrement statique et s'effectue uniquement après le contrôle du bon fonctionnement de l'élément 5.

Il est bien évident que les composants électroniques susmentionnés peuvent être remplacés par des composants équivalents.

On peut également prévoir de monter le circuit conforme à la présente invention sous forme d'un circuit intégré unique; ce qui réduit encore le prix de revient.

Le dispositif de la présente invention peut également être associé à un moyen de limitation du courant à l'enclenchement du circuit série. Un tel moyen peut consister en un circuit intégré de la série TDA 1024 combiné avec un triac, en une self ou en une résistance à coefficient de température négatif (CTN), par exemple.

Il est à noter que le dispositif conforme à la présente invention convient pour tout type de montage en série. A titre d'exemple, on peut citer 10 éléments de 24 V ou 20 éléments de 12 V, comme des lampes à incandescence ou à fluorescence, plus particulièrement les lampes halogènes. Il convient également pour les injecteurs de courant classiques.

## Revendications

1. Dispositif permettant le rétablissement automatique du courant de ligne en cas de claquage d'un ou de plusieurs éléments (5) faisant partie d'un montage en série, comportant un montage à semi-conducteur (3) monté en dérivation sur chaque élément (5) du montage en série et comprenant une gâchette (11), une première borne (7) étant reliée en amont dudit élément (5) et une deuxième borne (9) étant reliée en aval dudit élément (5), ledit montage à semi-conducteur (3) étant enclenché et maintenu en état de conduction dès que la tension à ses bornes (7,9) devient supérieure à un seuil de tension préalablement fixé entre sa gâchette (11) et ladite deuxième borne (9), caractérisé en ce que le seuil de tension entre la gâchette (11) et la deuxième borne (9) est fixé au moyen d'un circuit constitué d'une part d'un semi-conducteur de type DIAC (21) et d'autre part d'un circuit RC (25,23) et de deux diodes Zener (73,75) montées en tête-bêche,
les deux diodes Zener (73,75) étant raccordées d'une part à la première borne (7) et d'autre part à la deuxième borne (9) par l'intermédiaire d'une résistance de limitation de courant (17),
le circuit RC (25,23) étant raccordé à la première borne (7) et au noeud entre la résistance de limitation de courant (17) et les diodes Zener (73,75),
et le DIAC (21) étant raccordé entre la gâchette (11) et le noeud entre la résistance (25) et le condensateur (23) du circuit RC (25,23).

2. Dispositif suivant la revendication 1, caractérisé en ce que le semi-conducteur de type DIAC (21) est remplacé par deux diodes Zener (13,15) en opposition.

3. Dispositif selon l'une quelconque des revendications précédentes, caractérisé en ce que le montage à semi-conducteur (3) consiste en un semi-conducteur de type triac.

4. Dispositif selon l'une quelconque des revendications précédentes, caractérisé en ce qu'il comporte une résistance de maintien de la tension (19) entre la gâchette (11) et la première borne (7) du montage à semi-conducteur (3).

## Claims

1. Device enabling the line current to be restored automatically in the event of burn-out in one or more components (5) forming part of a series circuit, including a semiconductor circuit (3) mounted in parallel with each component (5) of the series circuit and comprising a gate (11), a first terminal (7) being connected upstream of the said component (5) and a second terminal (9) being connected downstream of the said component (5), the said semiconductor circuit (3) having been triggered and being maintained in a conducting state as soon as the voltage at its terminals (7, 9) becomes higher than a previously determined threshold between its gate (11) and the said second terminal (9), characterised in that the voltage threshold between the gate (11) and the second terminal (9) is determined by means of a circuit consisting of firstly a semiconductor of the DIAC type (21) and secondly an RC circuit (25, 23) and two Zener diodes (73, 75) mounted head-to-head,
the two Zener diodes (73, 75) being connected on the one hand to the first terminal (7) and on the other hand to the second terminal (9) through a current-limiting resistor (17),
the RC circuit (25, 23) being connected to the first terminal (7) and to the node between the current-limiting resistor (17) and the Zener diodes (73, 75),
and the DIAC (21) being connected between the gate (11) and the node between the resistor (25) and the capacitor (23) in the RC circuit (25, 23).

2. Device according to Claim 1, characterised in that the DIAC-type semiconductor (21) is replaced by two Zener diodes (13, 15) in opposition.

3. Device according to any one of the preceding claims, characterised in that the semiconductor circuit (3) consists of a semiconductor of the triac type.

4. Device according to any one of the preceding claims, characterised in that it includes a voltage-maintaining resistor (19) between the gate (11) and the first terminal (7) of the semiconductor circuit (3).

## Patentansprüche

1. Vorrichtung zur automatischen Wiederherstellung des Netzstroms im Falle des Durchbrennens von einem oder mehreren, zu einer Serienschaltung gehörenden Bauteilen (5), die eine Halbleiterschaltung (3) umfaßt, die parallel zu jedem Bauteil (5) der Serienschaltung gelegt ist und ein Gate (11), sowie eine mit dem Eingang des Bauteils (5) verbundene erste Klemme (7) und eine mit dem Ausgang des Bauteils (5) verbundene zweite Klemme (9) aufweist, wobei die Halbleiterschaltung (3) eingeschaltet wird und in dem leitenden Zustand gehalten wird, sobald die Spannung an ihren Klemmen (7,9) eine vorher festgelegte Spannungsschwelle zwischen ihrem Gate (11) und der zweiten Klemme (9) übersteigt, dadurch gekennzeichnet, daß die Spannungsschwelle zwischen dem Gate (11) und der zweiten Klemme (9) mittels einer Schaltung festgelegt wird, die einerseits aus einem Halbleiter von Typ DIAC (21), und andererseits aus einem RC-Glied (25,23) und zwei entgegengesetzt gerichteten Zenerdioden (73,75) besteht, wobei :
- die zwei Zenerdioden (73,75) einerseits mit der ersten Klemme (7), und andererseits über einen Strombegrenzungswiderstand (17) mit der zweiten Klemme (9) verbunden sind;
- das RC-Glied (25,23) mit der ersten Klemme (7) und dem Knotenpunkt zwischen dem Strombegrenzungswiderstand (17) und den Zenerdioden (73,75) verbunden ist;
- und der DIAC (21) mit dem Gate (11) und dem Knotenpunkt zwischen dem Widerstand (25) und dem Kondensator (23) des RC-Glieds (25,23) verbunden ist.

2. Vorrichtung gemäß Anspruch 1, dadurch gekennzeichnet, daß der Halbleiter vom Typ DIAC (21) durch zwei entgegengesetzt gerichtete Zenerdioden (13,15) ersetzt ist.

3. Vorrichtung gemäß irgendeinem der vorhergehenden Ansprüche, dadurch gekennzeichnet, daß die Halbleiterschaltung (3) aus einem Halbleiter vom Typ Triac besteht.

4. Vorrichtung gemäß irgendeinem der vorhergehenden Ansprüche, dadurch gekennzeichnet, daß sie einen Widerstand (19) zum Aufrechterhalten der Spannung zwischen dem Gate (11) und der ersten Klemme (7) der Halbleiterschaltung (3) aufweist.
